## Europäisches Patentamt
## European Patent Office
## Office européen des brevets

(11) Veröffentlichungsnummer: **0 238 087**
A2

(12) **EUROPÄISCHE PATENTANMELDUNG**

(21) Anmeldenummer: 87104068.9

(22) Anmeldetag: 19.03.87

(51) Int. Cl.³: **B 01 D 13/04**

(30) Priorität: 21.03.86 DE 3609538

(43) Veröffentlichungstag der Anmeldung:
23.09.87 Patentblatt 87/39

(84) Benannte Vertragsstaaten:
DE FR GB IT NL

(71) Anmelder: GKSS Forschungszentrum Geesthacht GmbH
Max-Planck-Strasse
D-2054 Geesthacht(DE)

(72) Erfinder: Böddeker, Karl, Dr.
Dorfstrasse 32a
D-2413 Breitenfeld(DE)

(72) Erfinder: Kaschemekat, Jürgen
Kronsbergstrasse 25
D-2054 Geesthacht(DE)

(74) Vertreter: Gottlob, Peter
Kernforschungszentrum Karlsruhe GmbH Stabs. Patente und Lizenzen Weberstrasse 5
D-7500 Karlsruhe 1(DE)

(54) Verfahren zur Herstellung eines dynamischen Membranfilters.

(57) Die Erfindung betrifft ein Verfahren zur Herstellung eines dynamischen Membranfilters, das insbesondere bei der Ultrafiltration oder Hyperfiltration verwendet wird, sowie die Verwendung der nach dem erfindungsgemäßen Verfahren hergestellten Membranen.

Die der Erfindung zugrundeliegende Aufgabe besteht darin, ein Verfahren der e.g. Art zu bieten, mit dem die Herstellung eines dynamischen Membranfiltes mit nur einer Substanz, z.B. unter Verwendung eines an sich bekannten Plattenmoduls, ermöglicht wird.

Die Aufgabe wird dadurch gelöst, daß

a) mit einem hydrophilen Betonit eine Suspension gebildet wird, die

b) voll ausgequollen und

c) als Suspension, evtl. in verdünnter Form und bei vorgegebenen Verfahrensparametern, wie Fließgeschwindigkeit, Druck, Temperatur and pH-Wert, auf die Stützschicht aufgebracht wird.

Croydon Printing Company Ltd.

EP 0 238 087 A2

Verfahren zur Herstellung eines dynamischen Membranfilters.

Die Erfindung betrifft ein Verfahren zur Herstellung eines dynamischen Membranfilters, das insbesondere bei der Ultrafiltration oder Hyperfiltration verwendet wird sowie die Verwendung der nach dem erfindungsgemäßen Verfahren hergestellten Membranen.

Für die Ultra- und Hyperfiltration ist die Verwendung von Edelstahlsinterrohren als Stützeinrichtung für Membranen bekannt. Bei hoher Packungsdichte (Verhältnis der Membranfläche zum umbauten Raum) werden diese Sinterrohre entweder nur mit Zirkoniumoxidhydrat oder mit Zirkoniumoxidhydrat und einer zusätzlichen Schicht aus Polyacrylsäure bzw. Polyacrylaten belegt (Firma CARRE, Inc., Seneca, SC 29678, USA). Abgesehen vom hohen Gewicht dieser Membranfilter und den hohen Herstellungskosten ergeben sich auch nur schlechte Trennleistungen.

Das Material Bentonit und dessen Quellfähigkeit ist zwar ebenfalls bekannt, aber es wird im wesentlichen nur als Zusatzmittel bei der Herstellung einer Matrix für radioaktive Abfallkörper enthaltende unterirdische Hohlräume mit einem erhärtenden Verfestigungsmittel aus tritiumhaltigen Wasser und Zement benutzt. Hierbei übernimmt Bentonit die Aufgabe, überstehendes Wasser aufzusaugen und somit zu binden (DE-PS 28 56 875).

Die der Erfindung zugrundeliegende Aufgabe besteht darin, ein Verfahren der e. g. Art zu bieten, mit dem die Herstellung eines dynamischen Membranfilters mit nur einer Substanz, z. B. unter Verwendung eines an sich bekannten Plattenmoduls, ermöglicht wird.

- 2 -                                                0238087

Die Lösung ist in den kennzeichnenden Merkmalen des Anspruches 1 beschrieben.

Die übrigen Ansprüche geben vorteilhafte Weiterbildungen des erfindungsgemäßen Verfahrens sowie Beispiele für Anwendungsfälle wieder.

Die Erfindung wird im folgenden anhand von Beispielen näher erläutert.

Zur Herstellung des Membranfilters wird als Grundeinrichtung beispielsweise ein Plattenmodul benutzt, wie er in der DE-PS 25 56 210 oder im Bericht GKSS 81/E/43, 1981 eingehend beschrieben ist.

Das technische Prinzip zur Bildung einer dynamischen Membran im Plattenmodul ist folgendes:

Mit einem geeigneten quellfähigen hydrophilen Bentonit (z. B. Bentone EW der Firma Kronos Titan-GmbH) wird unter Verwendung geeigneter Mischtechniken, wie z. B. Dispergieren oder mit Ultraschall, eine Suspension von z. B. 10 g Betone EW in 800 ml Wasser gebildet. Diese Suspension ist in ca. 24 Stunden (bei höheren Temperaturen auch kürzer) voll ausgequollen und ist zur Bildung einer dynamischen Membran verwendbar. Eine bestimmte Menge dieser Suspension wird dann - je nach Trennaufgabe und zu bildender Membranfläche - mit einer größeren Menge Wasser verdünnt (z. B. 60 g suspendiertes Bentone EW in 200 l Wasser für 2 m$^2$ Membranfläche). Diese stark verdünnte Suspensionslösung wird anschließend mit bestimmten, von der durch das Membranfilter zu erfüllenden Aufgabe abhängenden Verfahrensparametern (Fließgeschwindigkeit, Druck, Temperatur, pH-Wert) durch einen G4-Plattenmodul nach der o. g. Bauart im Batchverfahren gepumpt. Der G4-Plattenmodul ist vorher mit geeigneten Mem

branfiltern als Stützschichten für die Gelauflagen bestimmter Porenweite bestückt worden (solche Membranfilter werden von verschiedenen Herstellern als Massenware angeboten (z. B. von Sartorius GmbH)). Bevorzugt werden chemikalien- und temperaturbeständige Sorten.

Nach einer gewissen Umpumpzeit hat sich eine dynamisch gebildete Gelschicht des hydrophilen Bentonits mit einer bestimmten Schichtdicke auf die porösen Membranstützschichten gelegt. Die Permeationsgeschwindigkeit des Wassers der Suspensionslösung durch die Membranstützschichten ist zu Anfang der Gelschichtbildung sehr hoch und reduziert sich innerhalb kurzer Zeit (Minuten) auf einen konstanten Wert. Dies bedeutet, daß die dynamisch gebildete Gelschicht aus den vorher offenen porösen Membranfilterstützschichten Ultrafiltrationsmembranen mit bestimmten Eigenschaften gemacht hat. Die so gebildeten Membranen unterliegen nach ihrer Ausbildung keinerlei Veränderungen mehr.

Mit diesen dynamischen Membranen, deren Dicke und damit Eigenschaft aus den Verfahrensparametern bei der Bildung beeinflußt wird, lassen sich verschiedene Inhaltsstoffe aus wäßrigen Lösungen trennen. Der Vorteil gegenüber herkömmlichen Verfahren, wie Ultrafiltration, Umkehrosmose, Elektrodialyse, o. a., ist die selektive Abscheidung von Flüssigkeitsinhaltsstoffen unter erschwerten Bedingungen, wie aggressive Medien, hohe Temperaturen, extreme pH-Werte, hohe Drücke.

Beispiele:

Die Reduzierung des CSB-Wertes um ca. 60 % von Sickerwasser aus Sondermülldeponien, bzw. um ca. 40 % aus Brauereiabwasser bei pH-Werten von 13 und Temperaturen von über 40° C. Versuchsdurchführung im Juni 1985 bei der Firma Josef van Opbergen, BRD.

0238087

Salzrückhaltung von ca. 80 % gegenüber Natriumsulfat bei hohen Permeatflüßen von über 3000 $1/m^2$/Tag und 20 bar Systemdruck. Versuchsdurchführung bei der GKSS Forschungszentrum Geesthacht GmbH, BRD.

Die Membranen sind auch in Verbindung mit dem Plattenmodul zur Wasserentsalzung bzw. Wasserenthärtung, Oelemulsionstrennung, Abwasserbehandlungen (z. B. aus Färbereien, Papierherstellern, kommunale Abwässer usw.) verwendbar.

Der Plattenmodul vom Typ G4 ist durch eine Plattenbauweise, die besonders guten hydraulischen Eigenschaften (Zwangsüberströmung über jede einzelne Membran), sowie die Art der Abdichtung (elastisch verformbare Dichtungen) besonders geeignet für die Herstellung und den Betrieb der erfindungsgemäßen dynamischen Membranfilter. Zudem können die Modulplatten aus dem Kunststoff Ultem (von General Electric Plastics) gefertigt werden. Dieser Kunststoff ist in weiten Bereichen chemiekalien- und temperaturbeständig.

GKSS Forschungszentrum       Geesthacht, den 10.März 1987
Geesthacht GmbH            PLA 8618 Ga/he

0238087

## Patentansprüche:

1. Verfahren zur Herstellung eines dynamischen Membranfilters, das insbesondere bei der Ultrafiltration oder Hyperfiltration verwendet wird, auf einer Stützschicht, dadurch gekennzeichnet, daß

   a) mit einem hydrophilen Bentonit eine Suspension gebildet wird, die

   b) voll ausgequollen und

   c) als Suspension, eventuell in verdünnter Form und bei vorgegebenen Verfahrensparametern, wie Fließgeschwindigkeit, Druck, Temperatur und pH-Wert, auf die Stützschicht aufgebracht wird.

2. Verfahren nach Anspruch 1, dadurch gekennzeichnet, daß der Bentonit mit Wasser in Suspension versetzt und nach dem Ausquellen mit Wasser verdünnt wird.

3. Verfahren nach Anspruch 1 und 2, dadurch gekennzeichnet, daß die verdünnte Suspension auf Stützschichten in Form von porösen Membranen so lange aufgebracht wird, bis sich eine definierte Gelschicht auf den Stützschichten ausgebildet hat.

4. Verfahren nach Anspruch 1 bis 3, dadurch gekennzeichnet, daß die Stützschichten von den Membranen eines Plattenmoduls gebildet werden.

5. Verwendung des Verfahrens nach Anspruch 1 bis 4 zur Reduzierung des CBS-Wertes von Abwässern und zur Wasserentsalzung und/oder -Enthärtung.